# FASCICULE DE BREVET EUROPEEN

(11) **EP 2 747 244 B1**
(45) Date de publication et mention de la délivrance du brevet: **12.08.2015**
(21) Numéro de dépôt: 13198659.8
(22) Date de dépôt: 19.12.2013
(51) Int. Cl.: H02J 9/06

(54) **Dispositif d'alimentation d'un circuit programmable**
Vorrichtung zur Stromversorgung eines programmierbaren Schaltkreises
Power supply device of a programmable circuit

(30) Priorité: 21.12.2012 FR 1262639
(43) Date de publication de la demande: 25.06.2014
(73) Titulaire: Groupe Brandt, 92500 Rueil-Malmaison (FR)
(72) Inventeur: André, Xavier, 45380 LA CHAPELLE-SAINT-MESMIN (FR); Alirol, Etienne, 45380 LA CHAPELLE-SAINT-MESMIN (FR); Goumy, Cédric, 45190 TAVERS (FR); Gouardo, Didier, 45220 CERCOTTES (FR)
(74) Mandataire: Santarelli

(56) Documents cités:
- US-A1- 2002 171 295
- US-A1- 2008 111 423

## Description

La présente invention concerne un dispositif d'alimentation d'un circuit programmable.

En particulier, elle concerne un dispositif d'alimentation d'un circuit programmable dans un appareil électroménager.

Un dispositif d'alimentation fournit une ou plusieurs tensions continues d'alimentation à partir de la tension du réseau électrique alternatif ou tension de secteur. Ces tensions continues d'alimentation alimentent les différents circuits de l'appareil électroménager.

Lors d'une coupure de la tension de secteur de courte durée, il est important que certaines données de fonctionnement de l'appareil électroménager ne soient ni perdues ni corrompues.

Par exemple, lors de l'utilisation d'un appareil de cuisson, il est important que les puissances de consigne demandées par un utilisateur, ou les temps de cuisson programmés, ne soient pas perdues lorsqu'une coupure de tension de courte durée se produit.

Un moyen de conserver des données est de maintenir l'alimentation d'un circuit programmable, tel qu'un microcontrôleur en charge de la gestion de l'appareil électroménager.

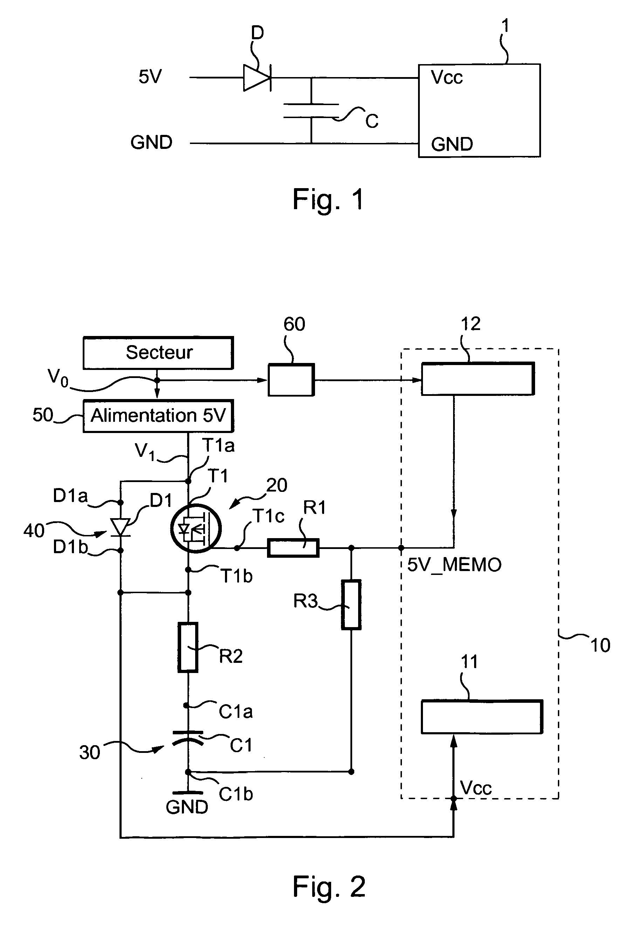

Un exemple de montage dans lequel l'alimentation d'un microcontrôleur 1 est maintenue est représenté à la figure 1.

Un tel montage est formé par une capacité C et une diode D reliées aux broches d'alimentation Vcc et GND du microcontrôleur de gestion 1. Dans un tel montage, lorsque le microcontrôleur 1 est alimenté, c'est-à-dire que la tension continue d'alimentation (ici 5V) est adressée à une broche d'alimentation positive Vcc, la capacité C se charge.

Lorsqu'une coupure de la tension de secteur se produit, la tension continue d'alimentation (5V) du microcontrôleur 1 disparait et la tension aux bornes de la capacité C est appliquée à la broche d'alimentation positive Vcc du microcontrôleur 1, la diode D se mettant en état bloqué.

La diode D présente ainsi une fonction d'isolement entre la tension continue d'alimentation (5V) et le microcontrôleur 1 (et la capacité C).

Néanmoins, du fait de la présence de cette diode D d'isolement, la valeur de la tension appliquée à la broche d'alimentation positive Vcc du microcontrôleur 1 (que la tension de secteur soit présente ou non) est inférieure à la valeur de la tension continue d'alimentation (5V), le fonctionnement du microcontrôleur 1 pouvant ainsi être dégradé.

Un dispositif d'alimentation selon l'état de la technique est décrit dans le document US-A-2008/111423.

La présente invention a pour but de proposer une amélioration d'un dispositif d'alimentation d'un circuit programmable, tel qu'un microcontrôleur ou un circuit logique programmable.

Ainsi, elle concerne un dispositif d'alimentation d'au moins une partie d'un circuit électronique dans un appareil électroménager comprenant des moyens de génération générant au moins un signal d'alimentation à partir d'un signal d'alimentation générale.

Selon l'invention, le dispositif d'alimentation comporte des moyens de contrôle reliant ledit au moins un signal d'alimentation à ladite au moins une partie d'un circuit électronique lorsqu'un signal de commande provenant d'un dispositif de détection d'une coupure du signal d'alimentation générale présente un premier état représentatif de la présence dudit signal d'alimentation générale, et ne reliant pas ledit au moins un signal d'alimentation à ladite au moins une partie d'un circuit électronique lorsque ledit signal de commande provenant du dispositif de détection d'une coupure du signal d'alimentation générale présente un second état représentatif de l'absence dudit signal d'alimentation générale.

Ainsi, en fonction de la présence ou de l'absence du signal d'alimentation générale, un dispositif de détection d'une coupure du signal d'alimentation générale génère un signal commandant l'alimentation de ladite au moins une partie d'un circuit électronique.

Selon une autre caractéristique, le dispositif d'alimentation comporte en outre des moyens de maintien aptes à stocker le niveau dudit au moins un signal d'alimentation et à appliquer un niveau de maintien de l'alimentation de ladite au moins une partie d'un circuit électronique, lorsque le signal de commande présente le second état représentatif de l'absence du signal d'alimentation générale.

Les moyens de maintien remplacent ainsi le signal d'alimentation en appliquant le niveau de maintien de l'alimentation de ladite au moins une partie d'un circuit électronique lorsque le signal d'alimentation générale est absent. Ladite au moins une partie d'un circuit électronique peut ainsi fonctionner dans un mode basse consommation, en particulier pour conserver en mémoire des données, ou encore normalement.

Par ailleurs, le dispositif d'alimentation comporte en outre des moyens d'optimisation du stockage du niveau dudit au moins un signal d'alimentation dans les moyens de maintien.

Ainsi, l'utilisation de l'énergie provenant du signal d'alimentation est optimisée.

Par exemple, les moyens d'optimisation comportent une diode de type Schottky.

Selon une caractéristique, les moyens de maintien comportent au moins une capacité reliée par une première borne aux moyens de contrôle et à ladite au moins une partie d'un circuit électronique et par une seconde borne au potentiel de référence.

Par exemple, les moyens de contrôle comportent au moins un transistor MOSFET reliant ledit au moins un signal d'alimentation et ladite au moins une partie d'un circuit électronique.

Grâce à l'utilisation d'un tel composant présentant une faible résistance lorsqu'il se trouve en conduction, la perte du niveau du signal entre le signal d'alimentation et le circuit programmable est minimale.

Par exemple, ladite au moins une partie d'un circuit électronique est intégrée dans un microcontrôleur configuré pour gérer le fonctionnement dudit appareil électroménager.

Dans un autre exemple, ladite au moins une partie d'un circuit électronique est intégrée dans un circuit logique programmable configuré pour gérer le fonctionnement dudit appareil électroménager.

Selon encore un autre exemple, ladite au moins une partie d'un circuit électronique et le dispositif de détection d'une coupure sont intégrés dans un microcontrôleur configuré pour gérer le fonctionnement de l'appareil électroménager.

Par exemple, ladite au moins une partie d'un circuit électronique sont des moyens de stockage de paramètres de fonctionnement dudit appareil électroménager.

Ainsi, des paramètres de fonctionnement utilisés par ladite au moins une partie d'un circuit électronique, et en particulier par le microcontrôleur sont conservés en absence du signal d'alimentation générale.

La présente invention concerne selon un deuxième aspect, un appareil électroménager comportant un dispositif d'alimentation conforme à l'invention.

Cet appareil électroménager présente des caractéristiques et avantages analogues à ceux décrits précédemment en relation avec le dispositif d'alimentation.

D'autres particularités et avantages de l'invention apparaîtront encore dans la description ci-après.

Aux dessins annexés, donnés à titre d'exemples non limitatifs :
- la figure 1 représente un dispositif d'alimentation de l'art antérieur ; et
- la figure 2 représente un mode de réalisation d'un dispositif d'alimentation d'au moins une partie d'un circuit électronique conforme à l'invention.

On va décrire à l'aide de la figure 2 un mode de réalisation d'un dispositif d'alimentation d'au moins une partie d'un circuit électronique conforme à l'invention.

Dans un exemple de réalisation, ladite au moins une partie d'un circuit électronique sont des moyens de stockage 11 de paramètres de fonctionnement d'un appareil électroménager.

Cet appareil électroménager peut être un appareil électroménager de cuisson, par exemple un four ou une table de cuisson, un appareil à laver le linge ou à laver et/ou sécher le linge, ou un appareil de réfrigération.

Ces moyens de stockage comportent par exemple au moins une mémoire RAM (de l'anglais « *Random Access Memory* »).

Dans le mode de réalisation que l'on va décrire, les moyens de stockage 11 de paramètres de fonctionnement d'un appareil électroménager sont intégrés dans un microcontrôleur 10.

Ce microcontrôleur 10 est configuré pour gérer le fonctionnement de l'appareil électroménager.

Dans d'autres modes de réalisation, les moyens de stockage de données 11 sont externes au microcontrôleur 10 ou peuvent être répartis en moyens de stockage interne au microcontrôleur 10 et moyens de stockage externe.

Dans un autre mode de réalisation, les moyens de stockage 11 de paramètres de fonctionnement de l'appareil électroménager sont intégrés à un circuit logique programmable configuré pour la gestion de l'appareil électroménager.

Un circuit logique programmable est par exemple une FPGA (de l'anglais « *Field-Programmable Gate Array* »)*,* un EPLD (« *Erasable Programmable Logic Device* »), un CPLD (« *Complex Programmable Logic Device »)* ou une PLA (« *Programmable Logic Array* »).

Comme pour le microcontrôleur 10, les moyens de stockage 11 peuvent être externes au circuit logique programmable ou répartis en moyens de stockage interne et moyens de stockage externe.

Dans l'exemple de réalisation décrit, le dispositif d'alimentation comporte des moyens de génération 50 générant un signal d'alimentation V₁ (ici une tension continue de 5V) à partir d'un signal d'alimentation générale V₀, par exemple la tension du réseau électrique alternatif ou tension de secteur.

La tension du réseau électrique alternatif présente par exemple une valeur de 230 VRMS (valeur de crête de 325V) pour le réseau électrique français.

Un dispositif de détection d'une coupure 12 du signal d'alimentation générale V₀ génère un signal de commande 5V_MEMO à un état qui est fonction de la présence ou de l'absence du signal d'alimentation générale V₀.

Dans l'exemple décrit, le dispositif de détection d'une coupure 12 du signal d'alimentation générale V₀ est intégré au microcontrôleur 10.

Dans cet exemple, le microcontrôleur 10 est alimenté par le signal d'alimentation V₁ appliqué à une broche d'alimentation V_{cc}.

Ainsi, le dispositif de détection d'une coupure 12 d'un signal d'alimentation générale V₀, ainsi que les moyens de stockage 11 sont alimentés ici par le signal d'alimentation V₁.

Dans le cas où les moyens de stockage 11 sont externes au microcontrôleur 10, les moyens de stockage 11 sont alimentés par le signal d'alimentation V₁, le microcontrôleur 10 et le dispositif de détection d'une coupure 12 du signal d'alimentation générale V₀ pouvant être alimentés par ce même signal d'alimentation V₁ ou par un autre signal d'alimentation.

Selon un autre mode de réalisation, les moyens de détection d'une coupure 12 du signal d'alimentation générale V₀ sont externes au microcontrôleur 10.

Le dispositif d'alimentation comporte en outre des moyens de mise en forme 60 du signal d'alimentation générale V₀, ici la tension de secteur. Ces moyens de mise en forme 60 comportent notamment des moyens pour abaisser le niveau de la tension de secteur (non représentés sur les dessins), ainsi que des moyens de transformation du signal de secteur (signal sinusoïdale) en un signal carré.

Dans cet exemple, les fronts montants et descendants du signal carré correspondent aux passages par le niveau 0 Volt de la tension de secteur.

Dans cet exemple, le dispositif de détection d'une coupure 12 du signal d'alimentation générale V₀ mesure la fréquence du signal carré généré par les moyens de mise en forme 60 du signal de secteur.

En fonction de la fréquence du signal carré mesurée, les moyens de détection 12 d'une coupure du signal d'alimentation générale V₀ détectent si le signal d'alimentation générale V₀ est présent ou absent.

Le dispositif d'alimentation comporte des moyens de contrôle 20 montés entre le signal d'alimentation V₁ et le microcontrôleur 10.

Les moyens de contrôle 20 sont aptes à relier ou à ne pas relier le signal d'alimentation V₁ au microcontrôleur 10, en fonction de l'état du signal de commande 5V_MEMO provenant du microcontrôleur 10.

On notera que ce signal de commande 5V_MEMO est généré par les moyens de détection d'une coupure 12 du signal d'alimentation générale V₀.

Lorsque les moyens de stockage 11 sont externes au microcontrôleur 10, les moyens de contrôle 20 sont montés entre le signal d'alimentation V₁ et les moyens de stockage 11, les moyens de détection d'une coupure 12 du signal d'alimentation générale V₀ et/ou le microcontrôleur 10 pouvant être alimentés par le signal d'alimentation V₁ relié au transistor de type MOSFET T₁ ou par un autre signal d'alimentation.

L'état de ce signal de commande 5V_MEMO est représentatif de la présence ou de l'absence du signal d'alimentation générale V₀.

Dans cet exemple, le signal de commande 5V_MEMO présente un premier état lorsque le signal d'alimentation générale V₀ est présent et un second état lorsque le signal d'alimentation générale V₀ est absent.

Le dispositif d'alimentation décrit comporte en outre des moyens de maintien 30 aptes à stocker le niveau du signal d'alimentation V₁ et à appliquer au microcontrôleur 10 un niveau de maintien de l'alimentation lorsque le signal de commande 5V_MEMO présente le second état (état représentatif de l'absence du signal d'alimentation générale V₀).

Lorsque les moyens de stockage 11 sont externes au microcontrôleur 10, le niveau de maintien de l'alimentation est appliqué au moins aux moyens de stockage 11.

Lorsqu'une coupure du signal d'alimentation générale V₀ s'est produite et que le niveau de maintien de l'alimentation est appliqué au microcontrôleur 10 (ou aux moyens de stockage 11 lorsqu'ils sont externes au microcontrôleur 10), le niveau descend au fur et à mesure que le temps passe.

A titre d'exemple nullement limitatif, le microcontrôleur 10 et les moyens de stockage 11 fonctionnent lorsque le niveau du signal appliqué à la broche Vcc (signal d'alimentation V₁ ou niveau de maintien d'alimentation provenant des moyens de maintien 30) n'est pas inférieur à une tension d'environ 2,84V.

Le dispositif d'alimentation comporte en outre des moyens d'optimisation 40 du stockage du niveau du signal d'alimentation V₁ dans les moyens de maintien 30.

Selon un mode de réalisation, les moyens de contrôle 20 comportent un transistor T1 de type MOSFET (*"Metal Oxide Semiconductor Field Effet Transistor*"), les moyens de maintien 30 comportent une capacité C1, et les moyens d'optimisation 40 comportent une diode D1 de type Schottky.

Dans l'exemple décrit, le drain T1 a du transistor T1 est relié au signal d'alimentation V₁ et à l'anode D1a de la diode D1 de type Schottky.

La source T1 b du transistor T1 est reliée à la cathode D1 b de la diode D1.

Le signal d'alimentation V₁ appliqué à la borne d'alimentation V_{cc} du microcontrôleur 10 est pris à la source T1 b du transistor et à la cathode D1 b de la diode D1.

La grille T1c du transistor T1 est reliée à travers une première résistance R1 à une broche de commande du microcontrôleur 10 générant le signal de commande 5V_MEMO.

La source T1b du transistor T1 est reliée à travers une deuxième résistance R2 à une première borne C1 a de la capacité C1.

Une deuxième borne C1 b de cette capacité C1 est reliée au potentiel de référence GND, ici le potentiel nul.

Une troisième résistance R3 est reliée entre la deuxième borne C1 b de la capacité C1 et la broche de commande générant le signal de commande 5V_MEMO du microcontrôleur 10.

On va décrire ensuite le fonctionnement du circuit décrit en référence à la figure 2.

On notera que dans l'exemple de réalisation décrit, les moyens de stockage 11 et le dispositif de détection d'une coupure 12 du signal d'alimentation générale V₀ sont intégrés au microcontrôleur 10.

Bien entendu, dans d'autres modes de réalisation, ces moyens 11 et ce dispositif 12 peuvent être externes au microcontrôleur 10.

Dans le mode de réalisation décrit, lorsque l'appareil électroménager est mis sous tension, la broche de commande générant le signal de commande 5V_MEMO du microcontrôleur 10 est configurée comme une entrée. Grâce à la présence de la troisième résistance R3 reliant la broche de commande générant le signal de commande 5V_MEMO et le potentiel de référence GND, le transistor T1 est mis en état fermé.

Ainsi, le signal d'alimentation V₁ est appliqué à la broche d'alimentation Vcc du microcontrôleur 10 (ou aux moyens de stockage 11 lorsqu'ils sont externes au microcontrôleur 10) à travers les moyens de commande 20 (le transistor T1 dans cet exemple). Le microcontrôleur 10 (ou les moyens de stockage 11 lorsqu'ils sont externes au microcontrôleur 10) est ainsi alimenté.

Lorsque le microcontrôleur 10 est mis en fonctionnement, la broche de commande générant le signal de commande 5V_MEMO est configurée comme une sortie.

Le signal de commande 5V_MEMO généré par le microcontrôleur 10 présente le premier état représentatif de la présence du signal d'alimentation générale V₀.

On notera que lorsque le dispositif de détection d'une coupure 12 du signal d'alimentation générale V₀ est externe au microcontrôleur 10, la broche de commande est située dans ce dispositif de détection d'une coupure 12.

Dans cet exemple, le signal de commande 5V_MEMO présente un état bas ou niveau nul.

Lorsque le signal de commande 5V_MEMO se trouve dans ce premier état (niveau nul), le transistor T1 est dans un état fermé et le signal d'alimentation V₁ est appliqué au microcontrôleur 10.

Pendant que le transistor T1 est fermé, la capacité C1 est chargée avec le niveau de tension du signal d'alimentation V₁, ici avec un niveau de 5V.

La chute de tension produite par le transistor T1 en état fermé est de l'ordre de 0,1 V au maximum. Ainsi, le niveau de tension appliqué au microcontrôleur 10 est sensiblement égal au niveau du signal d'alimentation V_{1.}

Lorsque le microcontrôleur 10 fonctionne et qu'une coupure de la tension du réseau électrique se produit, les moyens de détection de la coupure 12 du signal d'alimentation générale V₀ la détectent et mettent le signal de commande 5V_MEMO dans le second état représentatif de l'absence du signal d'alimentation générale V₀. Ici, le second état correspond à l'état haut ou niveau de 5V.

Ainsi, le transistor T1 est mis en état ouvert, et le signal d'alimentation V₁ n'est pas relié au microcontrôleur 10.

Les moyens de génération 50 du signal d'alimentation V₁ comportent en outre des moyens stockant de l'énergie (non représentés sur la figure 2).

Lorsqu'une coupure du signal d'alimentation générale V₀ se produit, une partie de l'énergie stockée dans les moyens de génération 50 est stockée dans la capacité C1 grâce à la diode D1.

Ainsi, la diode D1 représente des moyens d'optimisation du stockage du niveau du signal d'alimentation V₁ dans la capacité C1.

Lorsque le signal d'alimentation V₁ disparaît complètement, la diode D1 passe en état ouvert et la capacité C1 est chargée d'alimenter le microcontrôleur 10.

Ainsi, grâce à l'invention, les moyens de stockage des paramètres de fonctionnement d'un appareil électroménager continuent d'être alimentés lorsqu'une coupure de courte durée de l'alimentation générale se produit, tout en gardant le niveau du signal d'alimentation appliqué aux moyens de stockage lorsque le signal d'alimentation générale est présent.

## Revendications

1. Dispositif d'alimentation d'au moins une partie d'un circuit électronique dans un appareil électroménager comportant des moyens de génération (50) générant au moins un signal d'alimentation (V₁) à partir d'un signal d'alimentation générale (V₀), **caractérisé en ce qu'**il comporte des moyens de contrôle (20) reliant ledit au moins un signal d'alimentation (V₁) à ladite au moins une partie d'un circuit électronique (11) lorsqu'un signal de commande (5V_MEMO) provenant d'un dispositif de détection d'une coupure (12) du signal d'alimentation générale (V₀) présente un premier état représentatif de la présence dudit signal d'alimentation générale (V₀), et ne reliant pas ledit au moins un signal d'alimentation (V₁) à ladite au moins une partie d'un circuit électronique (11) lorsque ledit signal de commande (5V_MEMO) provenant du dispositif de détection d'une coupure (12) du signal d'alimentation générale (V₀) présente un second état représentatif de l'absence dudit signal d'alimentation générale (V₀).

2. Dispositif d'alimentation conforme à la revendication 1, **caractérisé en ce qu'**il comporte en outre des moyens de maintien (30) aptes à stocker le niveau dudit au moins un signal d'alimentation (V₁) et à appliquer un niveau de maintien de l'alimentation de ladite au moins une partie d'un circuit électronique (11), lorsque ledit signal de commande (5V_MEMO) présente ledit second état représentatif de l'absence du signal d'alimentation générale (V₀).

3. Dispositif d'alimentation conforme à la revendication 2, **caractérisé en ce qu'**il comporte en outre des moyens d'optimisation (40) du stockage du niveau dudit au moins un signal d'alimentation (V₁) aptes à permettre le stockage dans les moyens de maintien (30) d'une partie de l'énergie stockée dans lesdits moyens de génération (50).

4. Dispositif d'alimentation conforme à la revendication 3, **caractérisé en ce que** les moyens d'optimisation (40) comportent une diode (D1) de type Schottky.

5. Dispositif d'alimentation conforme à l'une des revendications 2 à 4, **caractérisé en ce que** les moyens de maintien (30) comportent au moins une capacité (C1) reliée par une première borne (C1 a) aux moyens de contrôle (20) et à ladite au moins une partie d'un circuit électronique (11) et par une seconde borne (C1 b) au potentiel de référence (GND).

6. Dispositif d'alimentation conforme à l'une des revendications 1 à 5, **caractérisé en ce que** lesdits moyens de contrôle (20) comportent au moins un transistor MOSFET (T1) reliant ledit au moins un signal d'alimentation (V₁) et ladite au moins une partie d'un circuit électronique (11).

7. Appareil électroménager, **caractérisé en ce qu'**il comporte un dispositif d'alimentation conforme à l'une des revendications 1 à 6.

8. Appareil électroménager conforme à la revendication 7, **caractérisé en ce qu'**il comporte un microcontrôleur (10) dans lequel au moins une partie d'un circuit électronique (11) est intégrée, ledit microcontrôleur (10) étant configuré pour gérer le fonctionnement dudit appareil électroménager.

9. Appareil électroménager conforme à la revendication 7, **caractérisé en ce qu'**il comporte un circuit logique programmable dans lequel au moins une partie d'un circuit électronique (11) est intégrée, ledit circuit logique programmable étant configuré pour gérer le fonctionnement dudit appareil électroménager.

10. Appareil électroménager conforme à la revendication 7, **caractérisé en ce qu'**il comporte un microcontrôleur (10) dans lequel au moins une partie d'un circuit électronique (11) et le dispositif de détection d'une coupure (12) sont intégrés, ledit microcontrôleur étant configuré pour gérer le fonctionnement dudit appareil électroménager.

11. Appareil électroménager conforme à l'une des revendications 7 à 10, **caractérisé en ce que** ladite au moins une partie d'un circuit électronique (11) sont des moyens de stockage de paramètres de fonctionnement dudit appareil électroménager.

## Patentansprüche

1. Vorrichtung zur Versorgung mindestens eines Abschnitts einer elektronischen Schaltung in einem Elektrohaushaltsgerät, mit Erzeugungsmitteln (50), die ausgehend von einem Signal (V₀) zur allgemeinen Versorgung mindestens ein Versorgungssignal (V₁) erzeugen, **dadurch gekennzeichnet, dass** sie Kontrollmittel (20) aufweist, die das mindestens eine Versorgungssignal (V₁) mit dem mindestens einen Abschnitt einer elektronischen Schaltung (11) verbinden, wenn ein Steuersignal (5V_MEMO), das von einer Vorrichtung (12) zur Erfassung einer Unterbrechung des Signals (V₀) zur allgemeinen Versorgung stammt, einen ersten Zustand hat, der für das Vorliegen des Signals (V₀) zur allgemeinen Versorgung repräsentativ ist, und das mindestens eine Versorgungssignal (V₁) nicht mit dem mindestens einen Abschnitt einer elektronischen Schaltung (11) verbinden, wenn das Steuersignal (5V_MEMO), das von der Vorrichtung (12) zur Erfassung einer Unterbrechung des Signals (V₀) zur allgemeinen Versorgung stammt, einen zweiten Zustand hat, der für das Fehlen des Signals (V₀) zur allgemeinen Versorgung repräsentativ ist.

2. Versorgungsvorrichtung nach Anspruch 1, **dadurch gekennzeichnet, dass** sie ferner Haltemittel (30) aufweist, die den Pegel des mindestens einen Versorgungssignals (V₁) speichern und einen Pegel zum Halten der Versorgung des mindestens einen Abschnitts einer elektronischen Schaltung (11) anlegen können, wenn das Steuersignal (5V_MEMO) den zweiten Zustand hat, der für das Fehlen des Signals (V₀) zur allgemeinen Versorgung repräsentativ ist.

3. Versorgungsvorrichtung nach Anspruch 2, **dadurch gekennzeichnet, dass** sie ferner Mittel (40) zur Optimierung der Speicherung des Pegels des mindestens einen Versorgungssignals (V₁) aufweist, die das Speichern eines Teils der in den Erzeugungsmitteln (50) gespeicherten Energie in den Haltemitteln (30) ermöglichen.

4. Versorgungsvorrichtung nach Anspruch 3, **dadurch gekennzeichnet, dass** die Optimierungsmittel (40) eine Diode (D1) der Art Schottky-Diode umfassen.

5. Versorgungsvorrichtung nach einem der Ansprüche 2 bis 4, **dadurch gekennzeichnet, dass** die Haltemittel (30) mindestens eine Kapazität (C1) aufweisen, die über einen ersten Anschluss (C1 a) mit den Kontrollmitteln (20) und mit dem mindestens einen Abschnitt einer elektronischen Vorrichtung (11) und über einen zweiten Anschluss (C1 b) mit dem Bezugspotential (GND) verbunden ist.

6. Versorgungsvorrichtung nach einem der Ansprüche 1 bis 5, **dadurch gekennzeichnet, dass** die Kontrollmittel (20) mindestens einen MOSFET-Transistor (T1) aufweisen, der das mindestens eine Versorgungssignal (V₁) und den mindestens einen Teil einer elektronischen Schaltung (11) verbindet.

7. Elektrohaushaltsgerät, **dadurch gekennzeichnet, dass** es eine Versorgungsvorrichtung nach einem der Ansprüche 1 bis 6 aufweist.

8. Elektrohaushaltsgerät nach Anspruch 7, **dadurch gekennzeichnet, dass** es eine Mikrosteuereinheit (10) aufweist, in der zumindest ein Abschnitt einer elektronischen Schaltung (11) integriert ist, wobei die Mikrosteuereinheit (10) derart konfiguriert ist, dass sie den Betrieb des Elektrohaushaltsgeräts steuert.

9. Elektrohaushaltsgerät nach Anspruch 7, **dadurch gekennzeichnet, dass** es eine programmierbare logische Schaltung aufweist, in der zumindest ein Abschnitt einer elektronischen Schaltung (11) integriert ist, wobei die programmierbare logische Schaltung derart konfiguriert ist, dass sie den Betrieb des Elektrohaushaltsgeräts steuert.

10. Elektrohaushaltsgerät nach Anspruch 7, **dadurch gekennzeichnet, dass** es eine Mikrosteuereinheit (10) aufweist, in der zumindest ein Abschnitt einer elektronischen Schaltung (11) und die Vorrichtung (12) zur Erfassung einer Unterbrechung integriert sind, wobei die Mikrosteuereinheit derart konfiguriert ist, dass sie den Betrieb des Elektrohaushaltsgeräts steuert.

11. Elektrohaushaltsgerät nach einem der Ansprüche 7 bis 10, **dadurch gekennzeichnet, dass** es sich bei dem mindestens einen Abschnitt einer elektronischen Schaltung (11) um Mittel zum Speichern von Betriebsparametern des Elektrohaushaltsgeräts handelt.

## Claims

1. A supply device for supplying at least part of an electronic circuit in a household appliance comprising generating means (50) for generating at least one supply signal (V₁) from a general supply signal (V₀), **characterized in that** it comprises control means (20) connecting said at least one supply signal (V₁) to said at least part of an electronic circuit (11) when an actuating signal (5V_MEMO) coming from a device for detecting a cut-off (12) of the general supply signal (V₀) presents a first state representing the presence of said general supply signal (V₀), and not connecting said at least one supply signal (V₁) to said at least part of an electronic circuit (11) when said actuating signal (5V_MEMO) coming from a device for detecting a cut-off (12) of the general supply signal (V₀) presents a second state representing the absence of said general supply signal (V₀).

2. A supply device according to claim 1, **characterized in that** it further comprises maintenance means (30) adapted to store the level of said at least one supply signal (V₁) and to apply a maintenance level of the supply for said at least part of an electronic circuit (11), when said actuating signal (5V_MEMO) presents said second state representing the lack of the general supply signal (V₀).

3. A supply device according to claim 2, **characterized in that** it further comprises optimization means (40) for optimizing the storage of the level of said at least one supply signal (V₁) adapted to enable the storage in the maintenance means (30) of a part of the energy stored in said generating means (50).

4. A supply device according to claim 3, **characterized in that** the optimization means (40) comprise a Schottky type diode (D1).

5. A supply device according to one of claims 2 to 4, **characterized in that** the maintenance means (30) comprise at least one capacitance (C1) connected by a first terminal (C1a) to the control means (20) and to said at least part of an electronic circuit (11) and by a second terminal (C1 b) to the reference potential (GND).

6. A supply device according to one of claims 1 to 5, **characterized in that** said control means (20) comprise at least one MOSFET transistor (T1) connecting said at least one supply signal (V₁) and said at least part of an electronic circuit (11).

7. A household appliance, **characterized in that** it comprises a supply device according to one of claims 1 to 6.

8. A household appliance according to claim 7, **characterized in that** it comprises a microcontroller (10) in which at least part of an electronic circuit (11) is integrated, said microcontroller (10) being configured to manage the operation of said household appliance.

9. A household appliance according to claim 7, **characterized in that** it comprises a programmable logic circuit in which at least part of an electronic circuit (11) is integrated, said programmable logic circuit being configured to manage the operation of said household appliance.

10. A household appliance according to claim 7, **characterized in that** it comprises a microcontroller (10) in which at least part of an electronic circuit (11) and the device for detecting a cut-off (12) are integrated, said microcontroller being configured to manage the operation of said household appliance.

11. A household appliance according to one of claims 7 to 10, **characterized in that** said at least part of an electronic circuit (11) are means for storing operating parameters of said household appliance.
